# EUROPÄISCHE PATENTSCHRIFT

(11) **EP 3 060 898 B1**
(45) Veröffentlichungstag und Bekanntmachung des Hinweises auf die Patenterteilung: **11.07.2018**
(21) Anmeldenummer: 14814689.7
(22) Anmeldetag: 24.11.2014
(51) Int. Cl.: G01M 3/28

(54) **VERFAHREN ZUM DETEKTIEREN VON LECKAGEN IN EINEM NETZWERK, VORRICHTUNG UND NETZWERK**
METHOD FOR DETECTING LEAKS IN A NETWORK, APPARATUS AND NETWORK
PROCÉDÉ DE DÉTECTION DE FUITES DANS UN RÉSEAU, DISPOSITIF ET RÉSEAU

(30) Priorität: 03.12.2013 DE 102013224752
(43) Veröffentlichungstag der Anmeldung: 31.08.2016
(73) Patentinhaber: Siemens Aktiengesellschaft, 80333 München (DE)
(72) Erfinder: ALLMARAS, Moritz, 81673 München (DE); WEHRSTEDT, Jan Christoph, 81829 München (DE); WEVER, Utz, 81539 München (DE)
(86) Internationale Anmeldenummer: PCT/EP2014/075407
(87) Internationale Veröffentlichungsnummer: WO 2015/082245

(56) Entgegenhaltungen:
- DE-A1-102011 078 240

## Beschreibung

### Gebiet der Erfindung

Die vorliegende Erfindung betrifft ein Verfahren zum Detektieren von Leckagen in einem Netzwerk, eine entsprechende Vorrichtung und ein Netzwerk.

### Technischer Hintergrund

Die vorliegende Erfindung wird im folgendem hauptsächlich in Bezug auf Wasserversorgungsnetze beschrieben. Allerdings ist die vorliegende Erfindung nicht auf die Verwendung mit Wasserversorgungsnetzen beschränkt. Vielmehr kann die vorliegende Erfindung mit einer Vielzahl von Netzen, z.B. Gasnetzen, Fernwärmenetzen oder auch elektrischen Versorgungsnetzen, eingesetzt werden.

Trinkwasser gehört mittlerweile zu einem der wichtigsten Güter im einundzwanzigsten Jahrhundert. In Wasserverteilungsnetzen kann es aber teilweise zu erheblichen Wasserverlusten kommen.

Die Verringerung von Wasserverlusten stellt daher eine große Herausforderung an die Leckerkennung und- Ortung in Wassernetzwerken dar. Eine Möglichkeit ist das Erkennen von Wasserverlusten durch eine Massenbilanz, bei der alle Einspeisemengen und insbesondere die Abflussmengen aller individuellen Wasserverbraucher gemessen werden. Allerdings überschreitet dieses Verfahren schon bei kleinen Wasserversorgungsnetzen vom Aufwand die Grenzen der Machbarkeit. Eine zeitgenaue Verbrauchsmessungen und Verbrauchsaufzeichnungen aller Kundendaten wird ferner durch die Gesetzeslage erschwert.

Zur Detektion von Leckagen in Wasserversorgungsnetzen kann z.B. auch die gesamte Wassermenge, die zu einer bestimmten Zeit ins Netzwerk fließt gemessen werden. Diese Werte werden in einer Zeitreihe abgelegt, die daraufhin analysiert wird, ob ein plötzlicher Anstieg des Verbrauchs vorliegt, der auf eine Leckage hindeuten könnte.

Üblicherweise werden große Wasserversorgungsnetze in Wasserversorgungszonen unterteilt. Diese Zonen werden wiederum in Subzonen unterteilt, die auch als district meter area (DMA) bezeichnet werden. Die DMAs werden so angelegt, dass sie nur einen Zufluss haben, dessen Durchfluss gemessen wird. Aus der Beobachtung dieser Durchflussmessung wird auf Unregelmäßigkeiten im Wasserverbrauch und somit auf Leckagen geschlossen. Dabei wird üblicherweise eine so genannte "night flow analysis" durchgeführt. Dabei wird durch Aufzeichnung des nächtlichen Zuflusses in eine DMA, z.B. alle 5 Sekunden zwischen 2:00 - 4:00 Uhr, ein minimaler Zufluss bestimmt, der den normalen nächtlichen Verbrauch und bereits vorhandene Leckagen umfasst.

Für die Überwachung des Wasserversorgungsnetzes wird dann lediglich ein Wert pro Nacht in der Zeit zwischen 2:00 - und 4:00 aufgenommen. Aus diesen Werten wird über Tage und Wochen hinweg eine Zeitreihe erstellt. Ein plötzlicher Anstieg des minimalen Zuflusses kann als Ursache eine neue Leckage haben und einen Alarm im Wasserversorgungsnetz auslösen.

Die genannten Möglichkeiten sind zum einen sehr allgemein und können ferner, insbesondere zeitlich befristete, Sondereffekte nicht hinreichend genau berücksichtigen.

Aus der deutschen Offenlegungsschrift DE 10 2011 078240 A1 (SIEMENS AG [DE]) 3. Januar 2013 (2013-01-03) ist ein Computergestütztes Verfahren zur Leckageerkennung in einem Gebiet (DMA) eines Versorgungsnetzes mit folgenden Schritten bekannt:
a) Stationäres Installieren von Durchflussmessgerätenan Zu- und Abflüssen des Gebietes;
b) Installation von Sensoren zur Bestimmung des Durchflusses oder des Wasserdruckes innerhalb des Gebietes;
c) Bestimmen des Wasserverbrauches für das Gebiet innerhalb einer oder mehrerer festgelegter Messperioden durch die Durchflussmessgeräte an den Zu- und Abflüssen und den Messwerten der Sensoren innerhalb des Gebietes;
d) Abbilden der Topologie des Versorgungsnetzes in einem hydraulischen Simulator und Erstellen eines hydraulischen Simulationsmodells für das Gebiet;
e) Bestimmen der Verbräuche innerhalb des Gebietes durch zufällige Festlegung anhand der Verbrauchsprofile und den Zu- und Abflüssen des Gebietes;
f) Berechnung des Fließ- und Druckverhaltens im Versorgungsnetz innerhalb einer der festgelegten Messperioden durch Monte-Carlo-Simulation; und
g) Bestimmen, ob eine Leckage vorliegt durch Vergleich der durch die Monte-Carlo-Simulation ermittelten Ergebnisse mit den von den Sensoren innerhalb des Gebietes gelieferten Messwerten.

### Zusammenfassung der Erfindung

Die Aufgabe der vorliegenden Erfindung liegt daher darin, eine verbesserte Möglichkeit zum Erkennen von Leckagen in einem Wasserversorgungsnetz bereitzustellen.

Diese Aufgabe wird hinsichtlich des Verfahrens durch die Merkmale gemäß des unabhängigen Patentanspruchs 1 und hinsichtlich der Vorrichtung durch die Merkmale des unabhängigen Patentanspruchs 5 erfindungsgemäß gelöst.

Da gemäß der vorliegenden Erfindung die Drücke bzw. Durchflüsse im gesamten Netzwerk durch eine Rekonstruktion der von den ersten Sensoren an wenigen Sensorpositionen real gemessenen Drücke oder Durchflüsse berechnet werden, kann dadurch das Problem umgangen werden, dass reale Verbrauchswerte für das gesamte Netzwerk zu einem vorgegebenen Zeitpunkt im Allgemeinen nicht bekannt sind.

Das vorliegende Verfahren eignet sich insbesondere auch, dynamische, nicht-periodische Effekte bzw. Sondereffekte bei der Leckagedetektion zu berücksichtigen. Ein solcher Sondereffekt kann z.B. eine Spielpause während einem Fußballspiel sein.

Bei der Leckagesuche in einem Netzwerk können ferner temporär installierte Sensoren als zweite Sensoren eingesetzt werden, was dem Betreiber des Netzes zusätzliche Analysemöglichkeiten liefert.

Insgesamt führt das vorgeschlagene Verfahren zu einer größeren Zuverlässigkeit und einer geringeren Fehlerrate bei der Leckageerkennung in Netzwerken.

Vorteilhafte Ausführungsformen und Weiterbildungen ergeben sich aus den Unteransprüchen sowie aus der Beschreibung unter Bezugnahme auf die Figuren.

In einer Ausführungsform weist das Bestimmen von Verbrauchsprofilen die Schritte Klassifizieren der Verbraucher des Netzwerks, Bestimmen des theoretischen Gesamtverbrauchs des Netzwerks basierend auf den klassifizierten Verbrauchern, Zuweisen eines Verbrauchswerts von 0 zu jedem der klassifizierten Verbraucher und Festlegen einer Menge Q des in dem Netzwerk transportierten Mediums, die kleiner ist, als der bestimmte theoretische Gesamtverbrauch, Messen des Gesamtverbrauchs des Netzwerks, Erhöhen des Verbrauchswerts eines zufällig ausgewählten der Verbraucher um den Wert Q, solange die Summe der Verbrauchswerte aller Verbraucher kleiner ist, als der gemessene Gesamtverbrauch, wobei die Wahrscheinlichkeit, dass ein Verbraucher ausgewählt wird, seinem Anteil am bestimmten theoretischen Gesamtverbrauch entspricht, auf. Die hier genannten Schritte werden in einer Ausführungsform für jede einzelne Messspannen eines Messzeitraums durchgeführt.

Dabei beträgt eine Messspanne einen vorgegebenen Bruchteil des Messzeitraums. In einer Ausführungsform beträgt der Messzeitraum zwischen einer und drei Minuten. Die Menge Q kann bei einem Wasserversorgungsnetz z.B. 3 Liter entsprechen. Dies ermöglicht eine sehr einfache Bestimmung individueller Verbrauchsprofile für die einzelnen Verbraucher des Netzwerks.

In einer Ausführungsform werden beim Klassifizieren der Verbraucher die Verbraucher qualitativ Qualifiziert, dass ein Vergleich der einzelnen Verbraucher untereinander möglich wird. Dies ermöglicht eine sehr einfache Erstellung der Verbrauchsprofile. Erfindungsgemäß wird beim Berechnen von Druckprofilen und/oder Durchflussprofilen mindestens eine Simulation des Netzwerks durchgeführt, wobei die Simulation insbesondere mehr als zwei Mal durchgeführt wird. Als Ergebnis der Simulation stehen Druckverteilungen in den einzelnen Knoten des Netzwerks und Durchflussverteilungen in den einzelnen Rohrabschnitten des Netzwerks zur Verfügung. Durch das mehrmalige Ausführen der Simulation entsprechend der Idee des Monte Carlo Samplings stehen für jeden Beobachtungszeitraum mehrere Simulationsergebnisse zur Verfügung, die bei dem folgenden Schritt der Datenkompression eingesetzt werden können. Erfindungsgemäß werden beim Reduzieren der Daten die Daten der Simulation basierend auf einer mathematischen Reihenentwicklung, insbesondere einer auf dem Proper Orthogonal Decomposition Verfahren, POD-Verfahren, basierenden Reihenentwicklung reduziert. Die Reduktion der Daten basierend auf einer Reihenentwicklung ermöglicht eine Rekonstruktion der Zustände in dem Netzwerk basierend auf lediglich wenigen realen Sensorwerten der ersten Sensoren.

In einer Ausführungsform wird das Verfahren für einen vorgegebenen Messzeitraum durchgeführt, wobei der Messzeitraum insbesondere ein Zeitraum niedrigen Verbrauchs in dem Netzwerk ist. Dadurch wird die Abweichung der Simulation zu dem realen Verhalten des Netzwerks gering gehalten.

In einer Ausführungsform sind der Druck und/oder die Durchflussmengen in dem Netzwerk als Fluiddruck und/oder Fluiddurchflussmenge ausgebildet. Dies ermöglicht es, die vorliegende Erfindung mit jedem Versorgungsnetzwerk zu verwenden, welches Fluide transportiert.

In einer Ausführungsform sind der Druck und/oder die Durchflussmengen in dem Netzwerk als elektrische Spannung und/oder elektrischer Strom ausgebildet. Dies ermöglicht es, die vorliegende Erfindung mit elektrischen Versorgungsnetzwerken zu verwenden. Der Einsatz der vorliegenden Erfindung in weiteren Arten von Versorgungsnetzen ist ebenfalls möglich.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Inhaltsangabe der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Ablaufdiagramm einer Ausführungsform des erfindungsgemäßen Verfahrens;
- Fig. 2: ein Ablaufdiagramm einer weiteren Ausführungsform des erfindungsgemäßen Verfahrens;
- Fig. 3: ein Blockschaltbild einer Ausführungsform einer Vorrichtung gemäß der vorliegenden Erfindung;
- Fig. 4: ein Blockschaltbild einer Ausführungsform eines Netzwerks gemäß der vorliegenden Erfindung;
- Fig. 5: ein Blockschaltbild einer Ausführungsform eines Netzwerks gemäß der vorliegenden Erfindung;
- Fig. 6: ein Blockschaltbild einer Ausführungsform eines Netzwerks gemäß der vorliegenden Erfindung;
- Fig. 7: ein Diagramm eines Druckverlaufs;
- Fig. 8: ein Diagramm eines Druckverlaufs;

In allen Figuren sind gleiche bzw. funktionsgleiche Elemente und Vorrichtungen - sofern nichts anderes angegeben ist - mit denselben Bezugszeichen versehen worden.

Unter einem Netzwerk ist im Rahmen dieser Patentanmeldung ein Netz zu verstehen, in welchem ein Medium von einer mehrerer Quellen oder Zuflüsse zu mindestens einem Verbraucher transportiert wird. Dabei kann das Medium ein Fluid, z.B. Wasser oder Gas, sein. Es kann aber z.B. auch ein elektrischer Strom transportiert werden. Im Rahmen dieser Patentanmeldung kann ein Netzwerk auch nur ein Teil oder eine Zone eines größeren übergeordneten Netzwerks sein. Ein Netzwerk im Rahmen dieser Patentanmeldung kann z.B. ein Subnetz, auch Subnet oder "District Meter Area", DMA, sein.

Unter einer Leckage ist im Rahmen dieser Patentanmeldung jeder Abfluss aus dem Netzwerk zu verstehen, der nicht durch einen Verbraucher hervorgerufen wird. Eine Leckage kann auch ein durch einen Verbraucher hervorgerufener aber von dem Netzbetreiber nicht autorisierter Abfluss aus dem Netzwerk sein.

Im Rahmen dieser Patentanmeldung ist unter einem Verbraucher jeder Abnehmer zu verstehen, der das in dem Netzwerk transportierte Medium abnimmt. Bei einem Wasserversorgungsnetz kann ein Verbraucher z.B. ein Einfamilienhaus, ein Mehrfamilienhaus, ein Bürogebäude, ein Schulhaus und dergleichen sein. Gleiches gilt bei Fernwärmenetzen und elektrischen Versorgungsnetzen.

Unter Verbrauchsprofilen der Verbraucher sind im Rahmen dieser Patentanmeldung Profile zu verstehen, die den Verbrauch der Verbraucher für einen vorgegebenen Zeitabschnitt kennzeichnen.

Das Klassifizieren von Verbrauchern bedeutet im Rahmen dieser Patentanmeldung, dass jedem Verbraucher ein charakteristisches Verbrauchsverhalten zugewiesen wird, mit welchem sich der Tagesgesamtverbrauch des jeweiligen Verbrauchers auf den jeweiligen Tag abbilden lässt. Beispielsweise haben Einfamilienhäuser ein anderes Verbrauchsverhalten als z.B. ein Mehrfamilienhaus, ein Bürogebäude oder ein Schulhaus.

Unter Druckprofilen bzw. Durchflussprofilen sind im Rahmen dieser Patentanmeldung Profile zu verstehen, die den zeitlichen Verlauf des Drucks an Kontenpunkten des Netzwerks oder den zeitlichen Verlauf des Durchflusses in Leitungen des Netzwerks angeben.

### Beschreibung von Ausführungsbeispielen

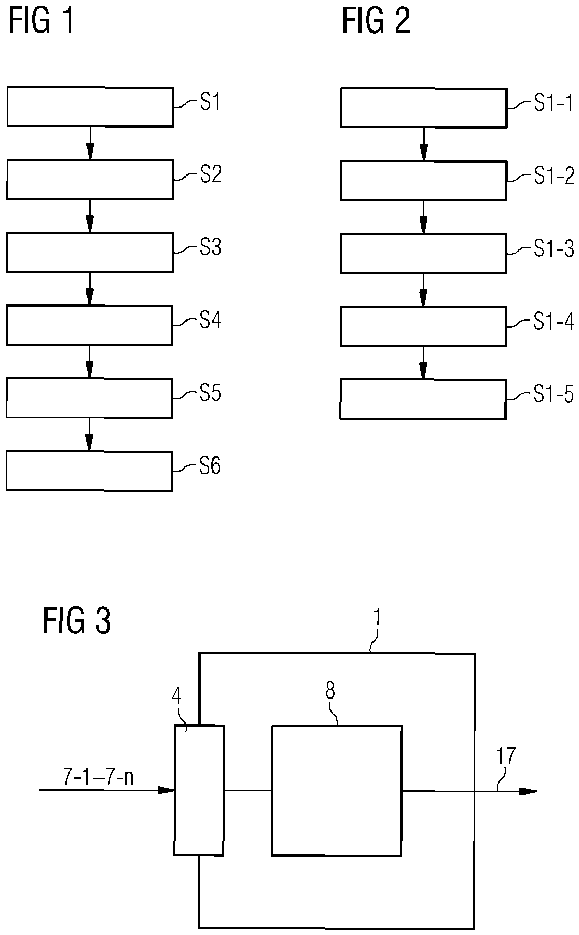

Fig. 1 zeigt ein Ablaufdiagramm einer Ausführungsform des erfindungsgemäßen Verfahrens.

Das Verfahren sieht in einem ersten Schritt S1 das Bestimmen von Verbrauchsprofilen 13-1 - 13-n für jeden Verbraucher 12-1 - 12-n des Netzwerks 2 vor.

Insbesondere können die Verbrauchsprofile 13-1 - 13-n für eine vorgegebene Messzeitspanne bestimmt werden. Die Messzeitspanne kann z.B. 1 Minute bis 1 Stunde betragen. In einer Ausführungsform kann die Messzeitspanne auch bis zu einer halben Stunde, insbesondere auch bis zu 10 Minuten oder bis zu 3 Minuten betragen.

In einem zweiten Schritt S2 werden Druckprofile 14-1 - 14-n und/oder Durchflussprofile 15-1 - 15-n für das Netzwerk 2 basierend auf den bestimmten Verbrauchsprofilen 13-1 - 13-n berechnet. Das Berechnen der Druckprofile 14-1 - 14-n und/oder der Durchflussprofile 15-1 - 15-n kann z.B. auf Basis einer hydraulischen oder elektrischen Simulation des Netzwerks 2 erfolgen. Die Simulation des Netzwerks 2 kann insbesondere auch mehrmals erfolgen. Dadurch werden für jeden Beobachtungszeitraum eine Vielzahl von Druckprofilen 14-1 - 14-n und/oder Durchflussprofilen 15-1 - 15-n bereitgestellt. Diese mehrfache Berechnung der Druckprofile 14-1 - 14-n und/oder Durchflussprofile 15-1 - 15-n entspricht dabei der Idee des Monte Carlo Samplings.

Der dritte Schritt S3 sieht das Reduzieren der Daten der berechneten Druckprofile 14-1 - 14-n und der berechneten Durchflussprofile 15-1 - 15-n vor. Dabei können die Daten der berechneten Druckprofile 14-1 - 14-n und der berechneten Durchflussprofile 15-1 - 15-n in einer Ausführungsform basierend auf einer Reihenentwicklung, insbesondere einer mathematischen Reihenentwicklung, reduziert werden. In einer Ausführungsform basiert die Reihenentwicklung auf dem Proper Orthogonal Decomposition Verfahren oder auch POD-Verfahren oder Hauptkomponentenanalyse genannt.

Die Hauptkomponentenanalyse dient dazu Datensätze zu vereinfachen. Dazu wird eine Vielzahl statistischer Variablen, hier der berechneten Druckprofile 14-1 - 14-n und der berechneten Durchflussprofile 15-1 - 15-n, durch eine geringe Anzahl aussagekräftiger Linearkombinationen genähert.

Ein vierter Schritt S4 sieht das Platzieren von ersten Sensoren 5-1 - 5-n und mindestens eines zweiten Sensors 6-1 - 6-n in dem Netzwerk 2 vor, wobei die ersten Sensoren 5-1 - 5-n und die zweiten Sensoren 6-1 - 6-n dazu ausgebildet sind Druck und/oder Durchflussmengen zu messen. Die ersten und zweiten Sensoren 5-1 - 5-n, 6-1 - 6-n werden dabei basierend auf dem Gappy-POD-Verfahren (Karen Willcox, MIT 2004) platziert. Dabei werden die Sensoren 5-1 - 5-n, 6-1 - 6-n in einem heuristischen Verfahren zunächst an den lokalen örtlichen Optima für die einzelnen POD Moden platziert. Durch die Minimierung der Kondition (condition number) der Koeffizientenmatrix M des Gappy-POD-Verfahrens kann die Platzierung der Sensoren weiter verbessert werden.

Ein fünfter Schritt S5 sieht das Berechnen von Druckwerten und/oder Durchflussmengen für die Positionen der zweiten Sensoren 6-1 - 6-n in dem Netzwerk 2 basierend auf den Messwerten 7-1 - 7-n der ersten Sensoren 5-1 - 5-n und den reduzierten Daten vor. In einer Ausführungsform werden dazu anhand der mathematischen Reihe des Schritts S3 für beliebige Knoten oder Leitungen in dem Netzwerk 2 Druckwerten und/oder Durchflussmengen berechnet.

Der sechste Schritt S6 sieht das Bestimmen der Differenz 16 zwischen den berechneten Druckwerten und/oder den berechneten Durchflussmengen und den von dem jeweiligen zweiten Sensor 6-1 - 6-n gemessenen Druckwerten und/oder den von dem jeweiligen zweiten Sensor 6-1 - 6-n gemessenen Durchflussmengen vor. Um die Differenz 16 zu berechnen, können in einer Ausführungsform die Druckwerten und/oder Durchflussmengen aus Schritt S5 für die Positionen der zweiten Sensoren 6-1 - 6-n ausgewählt werden und mit den real gemessenen Werten der zweiten Sensoren 6-1 - 6-n verglichen bzw. von diesen abgezogen werden oder umgekehrt.

Schließlich sieht der siebte Schritt S7 das Ausgeben eines Warnsignals 17 vor, wenn die bestimmte Differenz 16 über einem vorgegebenen Schwellwert 18 liegt.

Fig. 2 zeigt ein Ablaufdiagramm einer weiteren Ausführungsform des erfindungsgemäßen Verfahrens.

Das Ablaufdiagramm in Fig. 2 zeigt die einzelnen Schritte S1-1 - S1-5, die in dem Schritt S1 des erfindungsgemäßen Verfahrens in einer Ausführungsform durchgeführt werden.

In einer Ausführungsform werden der Schritt S1 und/oder das erfindungsgemäße Verfahren lediglich für einen vorgegebenen Messzeitraum ausgeführt. Der vorgegebene Messzeitraum kann dabei ein Zeitraum niedrigen Verbrauchs in dem Netzwerk 2 sein. Ist das Netzwerk 2 ein Wasserversorgungsnetzwerk, kann der Messzeitraum z.B. eine Zeitspanne von 3 Minuten sein, die in der Zeit zwischen 2 Uhr und 3 Uhr Nachts liegt.

Der Schritt S1-1 sieht das Klassifizieren der Verbraucher 12-1 - 12-n des Netzwerks 2 vor.

Dabei können die Klassifikationen in einer Ausführungsform qualitativ derart bestimmt werden, dass es möglich wird, den Verbrauch der einzelnen Verbraucher 12-1 - 12-n untereinander zu vergleichen. Beispielsweise kann der Verbrauch des Verbrauchers 12-1 - 12-n mit dem geringsten Verbrauch, z.B. der Verbrauch eines kleinen Einfamilienhauses, als Basiswert vorgegeben werden. Die Verbräuche der weitern Verbraucher 12-1 - 12-n können dann lediglich einen Faktor aufweisen, um den der Verbrauch der weiteren Verbraucher 12-1 - 12-n den Basiswert übersteigt. Für ein Zweifamilienhaus könnte z.B. ein Faktor von 2 gegeben sein.

Die Klassifikationen können in einer weiteren Ausführungsform z.B. in einer Datenbank gespeichert werden und anhand des jeweiligen Gebäudetyps ausgewählt werden. Der Gebäudetyp kann z.B. ein Einfamilienhaus, ein Mehrfamilienhaus, ein Reihenhaus, ein Bürogebäude, eine Schule oder dergleichen sein. Die Klassifikationen der einzelnen Verbraucher 12-1 - 12-n können für den Verbrauch der einzelnen Verbraucher für unterschiedliche Tageszeiten unterschiedliche Werte aufweisen. Dabei kann der Verbrauch der einzelnen Verbraucher 12-1 - 12-n in den Klassifikationen jeweils für vorgegebene Zeiträume von z.B. 10 Minuten oder dergleichen angegeben werden.

Der Schritt S1-2 sieht das Bestimmen des theoretischen Gesamtverbrauchs des Netzwerks 2 basierend auf den klassifizierten Verbrauchern 12-1 - 12-n vor. Dies kann durch eine einfache Hochrechnung der in den Klassifikationen angegebenen Verbräuche der einzelnen Verbraucher 12-1 - 12-n erfolgen.

Die eigentliche Bestimmung der Verbrauchsprofile 13-1 - 13-n erfolgt in den Schritten S1-3 - S1-5.

Dabei wird in dem Schritt S1-3 jedem der klassifizierten Verbraucher 12-1 - 12-n ein Verbrauchswert von 0 zugewiesen. Ferner wird eine Menge Q des in dem Netzwerk 2 transportierten Mediums festgelegt, die kleiner ist, als der bestimmte theoretische Gesamtverbrauch. Dabei bestimmt der Betrag der Menge Q die Genauigkeit der Verbrauchsprofile. In einem Wasserversorgungsnetzwerk kann die Menge Q z.B. 3 Liter betragen, was in etwa einer halben Toilettenspülung entspricht.

Daraufhin wird in Schritt S1-4 der Gesamtverbrauch des Netzwerks 2 gemessen. Dies kann z.B. mit einem Verbrauchssensor 10 erfolgen, der an dem Zulauf des Netzwerks 2 angeordnet wird.

Schließlich wird im Schritt S1-5 der Verbrauchswert eines zufällig ausgewählten der Verbraucher 12-1 - 12-n um den Wert Q erhöht. Dieses Erhöhen des Verbrauchswerts eines zufällig ausgewählten der Verbraucher 12-1 - 12-n wird wiederholt, solange die Summe der Verbrauchswerte aller Verbraucher 12-1 - 12-n kleiner ist, als der gemessene Gesamtverbrauch. Dabei wird bei jeder Iteration ein neuer Verbraucher 12-1 - 12-n zufällig ausgewählt. Die Wahrscheinlichkeit, dass ein Verbraucher 12-1 - 12-n ausgewählt wird, entspricht dem Anteil des jeweiligen Verbrauchers 12-1 - 12-n am bestimmten theoretischen Gesamtverbrauch des Netzwerks 2.

Fig. 3 zeigt ein Blockschaltbild einer Ausführungsform einer Vorrichtung 1 gemäß der vorliegenden Erfindung.

Die Vorrichtung 1 in Fig. 3 weist eine Sensorschnittstelle 4 auf, die dazu ausgebildet ist, die Vorrichtung 1 mit ersten Sensoren 5-1 - 5-n und mit zweiten Sensoren 6-1 - 6-n zu verbinden. Die ersten Sensoren 5-1 - 5-n und mit zweiten Sensoren 6-1 - 6-n übermitteln Messwerte 7-1 - 7-n über die Sensorschnittstelle 4 an eine Recheneinrichtung 8 der Vorrichtung 1. Die Recheneinrichtung 8 ist dazu ausgebildet, ein Verfahren gemäß der vorliegenden Erfindung durchzuführen, wie es bereits in Verbindung mit Figuren 1 und 2 beschrieben wurde. Ergeben die Berechnungen der Recheneinrichtung 8, dass eine Leckage in dem Netzwerk 2 vorliegen könnte, gibt die Recheneinrichtung 8 ein Warnsignal 17 aus.

In einer Ausführungsform ist die Recheneinrichtung 8 insbesondere dazu ausgebildet, Verbrauchsprofile 13-1 - 13-n für jeden Verbraucher 12-1 - 12-n des Netzwerks 2 zu bestimmen, Druckprofile 14-1 - 14-n und/oder Durchflussprofile 15-1 - 15-n für das Netzwerk 2 basierend auf den bestimmten Verbrauchsprofilen 13-1 - 13-n zu berechnen, die Daten der berechneten Druckprofile 14-1 - 14-n und der berechneten Durchflussprofile 15-1 - 15-n zu reduzieren, Druckwerte und/oder Durchflussmengen für die Positionen der zweiten Sensoren 6-1 - 6-n in dem Netzwerk 2 basierend auf den Messwerten 7-1 - 7-n der ersten Sensoren 5-1 - 5-n und den reduzierten Daten zu berechnen, die Differenz 16 zwischen den berechneten Druckwerten und/oder den berechneten Durchflussmengen und den von dem jeweiligen zweiten Sensor 6-1 - 6-n gemessenen Druckwerten und/oder den von dem jeweiligen zweiten Sensor 6-1 - 6-n gemessenen Durchflussmengen zu bestimmen, und ein Warnsignal 17 auszugeben, wenn die bestimmte Differenz 16 über einem vorgegebenen Schwellwert 18 liegt.

Die Recheneinrichtung 8 kann eine einzelne Recheneinrichtung 8, z.B. ein einzelner Computer oder Mikroprozessor sein. Die Recheneinrichtung 8 kann aber auch als eine Vielzahl von Computern oder Prozessoren ausgebildet sein, die z.B. in einem Netzwerk miteinander gekoppelt sind.

Ferner kann die Recheneinrichtung in einer Ausführungsform dazu ausgebildet sein, die Druckwerte und/oder Durchflussmengen für die Positionen der zweiten Sensoren 6-1 - 6-n und die reduzierten Daten zu einem Zeitpunkt zu berechnen, zu welchem keine Überwachung des Netzwerks 2 stattfindet und diese vorab berechneten Informationen zu speichern. Bei der Überwachung des Netzwerks 2 können diese gespeicherten Informationen dann abgerufen werden und mit realen Messwerten der zweiten Sensoren 6-1 - 6-n verglichen werden. Insbesondere können die vorab durchzuführenden Berechnungen z.B. auf einer Recheneinrichtung 8 durchgeführt werden, die nicht diejenige Recheneinrichtung 8 ist, die zur Überwachung des Netzwerks 2 genutzt wird. So können die rechenintensiven Berechnungen z.B. vorab auf einem leistungsfähigen Computer durchgeführt werden und die Überwachung des Netzwerks 2 kann z.B. auf leistungsschwächeren Computern, z.B. auf eingebetteten Systemen, durchgeführt werden.

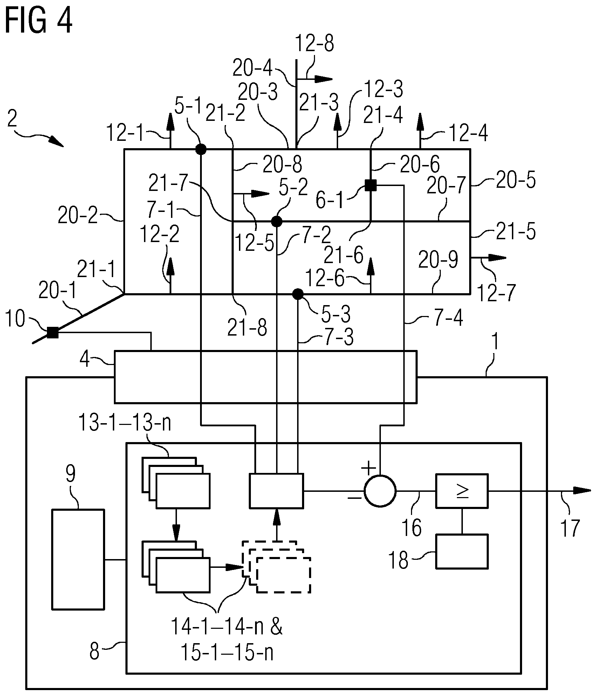

Fig. 4 zeigt ein Blockschaltbild einer Ausführungsform eines Netzwerks 2 gemäß der vorliegenden Erfindung.

Das Netzwerk 2 weist eine Vielzahl von Leitungen 20-1 - 20-9 und Knoten 21-1 - 21-8 auf. Die Leitung 20-1 ist der Zufluss des Netzwerks 2 und weist einen Verbrauchssensor 10 auf. Der Knoten 21-1 verbindet die Leitung 20-1 mit den Leitungen 20-2 und 20-9. Die Leitung 20-2 geht in die Leitung 20-3 über. Der Knoten 21-2 verbindet die Leitung 20-3 mit der Leitung 20-8. Die Leitung 20-8 ist an deren anderem Ende über Knoten 21-8 mit Leitung 20-9 verbunden. Die Leitung 20-3 ist über Knoten 21-4 mit Leitung 20-6 gekoppelt, die über Knoten 21-6 mit Leitung 20-7 gekoppelt ist. Leitung 20-7 ist über Knoten 21-7 mit Leitung 20-8 und über Knoten 21-5 mit Leitung 20-5 gekoppelt. Leitung 20-5 verbindet Leitung 20-3 mit Leitung 20-9. Ferner ist zwischen Knoten 21-2 und 21-4 Leitung 20-3 über Knoten 21-3 mit Leitung 20-4 gekoppelt.

Die Verbraucher 12-1 - 12-8 sind als Pfeile dargestellt, die an den jeweiligen Leitungen 20-1 - 20-9 angeordnet sind.

Verbraucher 12-1, 12-3 und 12-4 sind an Leitung 20-3 angeordnet. Verbraucher 12-1 ist vor Knoten 21-2, Verbraucher 12-3 ist nach Knoten 21-3 und Verbraucher 12-4 ist nach Knoten 21-4 in Leitung 20-3 angeordnet. Verbraucher 12-2 ist in Leitung 20-9 zwischen Knoten 21-1 und Knoten 21-8 angeordnet. Verbraucher 12-5 ist in Leitung 20-8 zwischen Knoten 21-2 und Knoten 21-7 angeordnet. Verbraucher 12-6 ist in Leitung 20-9 zwischen Knoten 21-8 und Leitung 20-5 angeordnet. Verbraucher 12-7 ist in Leitung 20-5 zwischen Knoten 21-5 und Leitung 20-9 angeordnet. Schließlich ist Verbraucher 12-8 in Leitung 20-4 angeordnet.

In dem Netzwerk 2 sind ferner drei erste Sensoren 5-1 - 5-3 angeordnet, die Messwerte 7-1 - 7-3 an die Vorrichtung 1 übermitteln. Der erste Sensor 5-1 ist zwischen Verbraucher 12-1 und Knoten 21-2 in Leitung 20-3 angeordnet. Der erste Sensor 5-2 ist zwischen Knoten 21-7 und Knoten 21-6 in Leitung 20-7 angeordnet. Der erste Sensor 5-3 ist in Leitung 20-9 zwischen Knoten 21-8 und dem Verbraucher 12-6 angeordnet.

Das Netzwerk 2 weist ferner einen zweiten Sensor 6-1 auf, der in Leitung 20-6 angeordnet ist. Die ersten Sensoren 5-1 - 5-3 sind in Fig. 4 als Kreise und der zweite Sensor 6-1 ist als Quadrat dargestellt.

Schließlich weist das Netzwerk 2 eine Vorrichtung 1 auf, die eine Sensorschnittstelle 4, eine Datenbank 9 und eine Recheneinrichtung 8 aufweist. Die Recheneinrichtung 8 ist dazu ausgebildet Verbrauchsprofile 13-1 - 13-n für die Verbraucher 12-1 - 12-8 zu bestimmen. Aus den Verbrauchsprofile 13-1 - 13-n berechnet die Recheneinrichtung 8 Druckprofile 14-1 - 14-n und/oder Durchflussprofile 15-1 - 15-n für das Netzwerk 2 und reduziert die Daten der Druckprofile 14-1 - 14-n und/oder Durchflussprofile 15-1 - 15-n. Dies ist in Fig. 4 durch gestrichelte Linien dargestellt. Aus den reduzierten Daten und den Messwerten 7-1 - 7-3 der ersten Sensoren 5-1 - 5-3 berechnet die Recheneinrichtung 8 Durchflusswerte für die Position des zweiten Sensors 6-1, also für die Leitung 20-6. Diesen Wert zieht die Recheneinrichtung 8 von dem von dem zweiten Sensor 6-1 gemessen Wert für den Durchfluss in Leitung 20-6 ab und vergleicht die Differenz 16 mit einem vorgegebenen Schwellwert 18. Ist die Differenz 18 größer als der Schwellwert 18, gibt die Recheneinrichtung 8 ein Warnsignal 17 aus.

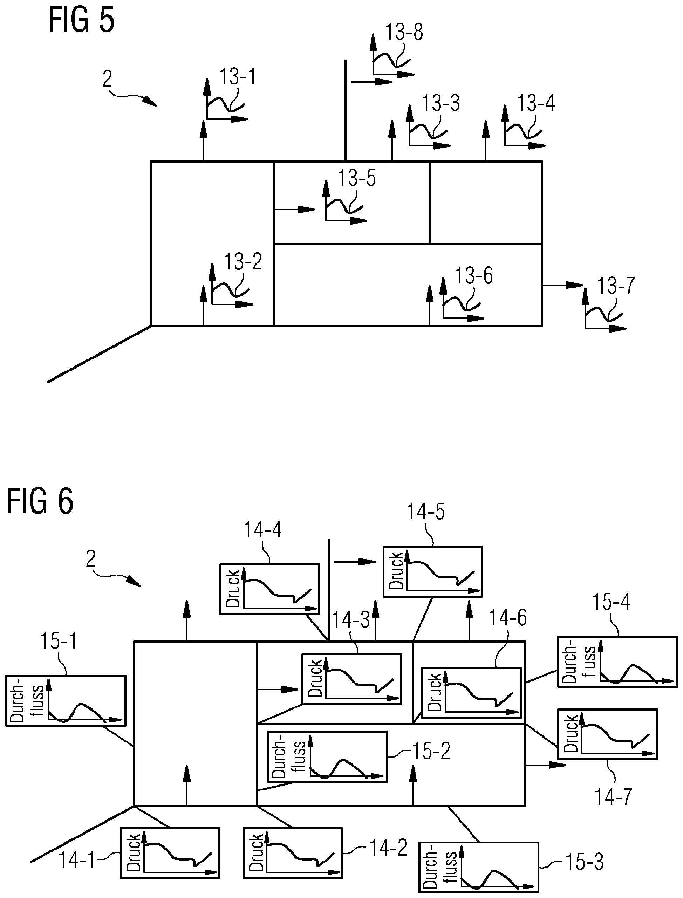

Fig. 5 zeigt ein Blockschaltbild einer Ausführungsform eines Netzwerks 2 gemäß der vorliegenden Erfindung.

Die Fig. 5 dient der Veranschaulichung des ersten Verfahrensschritts S1, in welchem für die Verbraucher 12-1 - 12-8 des Netzwerks 2 Verbrauchsprofile 13-1 - 13-8 bestimmt werden. Das Netzwerk 2 der Fig. 5 basiert auf dem Netzwerk 2 der Fig. 4. Der Übersichtlichkeit halber wurden in Fig. 5 lediglich die Verbrauchsprofile 13-1 - 13-8 mit Bezugszeichen versehen.

In Fig. 5 ist zu sehen, dass jedem der Verbraucher 12-1 - 12-8 ein eigenes Verbrauchsprofil 13-1 - 13-8 zugeordnet wird, welches den zeitlichen Verlauf des Verbrauchs für den jeweiligen Verbraucher 12-1 - 12-8 zumindest qualitativ angibt. In einer Ausführungsform können die Verbrauchsprofile 13-1 - 13-8 den Verbrauch nicht nur qualitativ sondern sehr exakt angeben. In einer Ausführungsform können die Verbrauchsprofile 13-1 - 13-8 den Verbrauch zeitdiskret und quantisiert angeben. Die Zeitschritte und Quantisierungsschritte können dabei je nach Anwendungsfall und verfügbarer Rechenleistung angepasst werden.

Fig. 6 zeigt ein weiteres Blockschaltbild einer Ausführungsform eines Netzwerks 2 gemäß der vorliegenden Erfindung.

Fig. 6 zeigt zu einigen der Leitungen 20-1 - 20-9 Durchflussprofile 15-1 - 15-4 und zu einigen der Knoten 21-1 - 21-8 Druckprofile 14-1 - 14-7, die basierend auf den in Fig. 5 dargestellten Verbrauchsprofilen 13-1 - 13-8 erstellt wurden.

Durchflussprofil 15-1 gibt den Durchfluss für Leitung 20-2 an. Durchflussprofil 15-2 gibt den Durchfluss für Leitung 20-8 an. Durchflussprofil 15-3 gibt den Durchfluss für Leitung 20-9 an. Durchflussprofil 15-4 gibt den Durchfluss für Leitung 20-5 an.

Druckprofil 14-1 gibt den Druck in Konten 21-1 an. Druckprofil 14-2 gibt den Druck in Konten 21-8 an. Druckprofil 14-3 gibt den Druck in Konten 21-7 an. Druckprofil 14-4 gibt den Druck in Konten 21-3 an. Druckprofil 14-5 gibt den Druck in Konten 21-4 an. Druckprofil 14-6 gibt den Druck in Konten 21-6 an. Druckprofil 14-7 gibt den Druck in Konten 21-5 an.

Die Durchflussprofile 15-1 - 15-4 und die Druckprofile 14-1 - 14-7 können z.B. durch eine Simulation basierend auf den Daten der in Fig. 5 dargestellten Verbrauchsprofile 13-1 - 13-8 berechnet werden. Die Piktogramme der Durchflussprofile 15-1 - 15-4 und der Druckprofile 14-1 - 14-7 in Fig. 6 sind lediglich beispielhaft und können in Ausführungsformen der vorliegenden Erfindung von den gezeigten Durchflussprofilen 15-1 - 15-4 und Druckprofilen 14-1 - 14-7 abweichen. Das gleiche gilt für die Piktogramme der in Fig. 5 dargestellten Verbrauchsprofile 13-1 - 13-8.

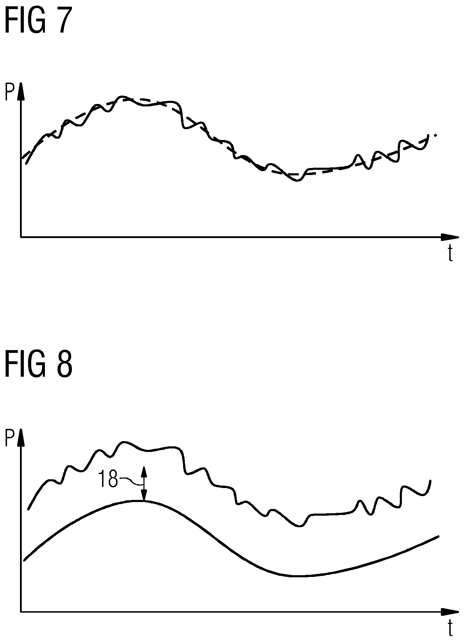

Fig. 7 zeigt ein Diagramm eines Druckverlaufs. In Fig. 7 zeigt die Abszissenachse die Zeit und die Ordinatenachse den Druck. Das Diagramm der Fig. 7 zeigt einen beispielhaften Druckverlauf für einen beliebigen Knoten 21-1 - 21-n eines überwachten Netzwerks 2. Dabei wird der reale, oder von einem zweiten Sensor 6-1 - 6-n gemessene Druckverlauf durch eine mit einer durchgezogenen Linie dargestellte Kurve und der theoretische für die Position des entsprechenden zweiten Sensors 6-1 - 6-n berechnete Druckverlauf durch eine mit einer gestrichelten Linie dargestellte Kurve veranschaulicht. Beide Kurven haben einen in oszillierenden Verlauf. Die reale Kurve weist dabei einen hochfrequenten Anteil auf, der sich als ein Schwanken der Kurve um die glatte Kurve des theoretischen Werts darstellt.

In Fig. 7 ist zu erkennen, dass beide Kurven übereinander liegen und somit der theoretisch berechnete Druck und der durch den zweiten Sensor 6-1 - 6-n gemessene Druck, bis auf die hochfrequenten Schwankungen, gleich sind.

Es liegt folglich kein Anzeichen für eine Leckage in dem überwachten Netzwerk 2 vor.

Fig. 8 zeigt ebenfalls ein Diagramm eines Druckverlaufs. In Fig. 8 zeigt ebenfalls die Abszissenachse die Zeit und die Ordinatenachse den Druck.

Das Diagramm der Fig. 8 entspricht weitgehend dem Diagramm der Fig. 7. Allerdings liegt in dem Diagramm der Fig. 8 die Kurve des realen, oder gemessenen Druckverlaufs deutlich über der Kurve für den berechneten Druckverlauf. In Fig. 8 ist ferner auf der Kurve für den berechneten Druckverlauf auch der Schwellwert 18 eingezeichnet. Es ist zu erkennen, dass die Kurve des realen, oder gemessenen Druckverlaufs über dem Schwellwert 18 liegt.

Das Diagramm der Fig. 8 deutet folglich auf eine Leckage in dem Netzwerk 2 hin und führt dazu, dass ein Warnsignal 17 ausgegeben wird.

## Patentansprüche

1. Verfahren zum Detektieren von Leckagen (3) in einem Netzwerk (2), mit den Schritten:
- Bestimmen (S1) von Verbrauchsprofilen (13-1 - 13-n) für jeden Verbraucher (12-1 - 12-n) des Netzwerks (2);
- Berechnen (S2) von Druckprofilen (14-1 - 14-n) und/oder Durchflussprofilen (15-1 - 15-n) für das Netzwerk (2) basierend auf den bestimmten Verbrauchsprofilen (13-1 - 13-n), wobei beim Berechnen von Druckprofilen (14-1 - 14-n) und/oder Durchflussprofilen (15-1 - 15-n) mindestens eine Simulation des Netzwerks (2) durchgeführt wird, wobei die Simulation insbesondere mehr als zwei Mal durchgeführt wird;
- Reduzieren (S3) der Daten der berechneten Druckprofile (14-1 - 14-n) und der berechneten Durchflussprofile (15-1 - 15-n), wobei beim Reduzieren der Daten die Daten der Simulation basierend auf einer mathematischen Reihenentwicklung, insbesondere einer auf dem Proper Orthogonal Decomposition Verfahren (POD-Verfahren) basierenden Reihenentwicklung reduziert werden;
- Platzieren (S4) von ersten Sensoren (5-1 - 5-n) und mindestens einem zweiten Sensor (6-1 - 6-n) in dem Netzwerk (2), wobei die ersten Sensoren (5-1 - 5-n) und der mindestens eine zweite Sensor (6-1 - 6-n) dazu ausgebildet sind Druck und/oder Durchflussmengen zu messen, wobei beim Platzieren von ersten Sensoren (5-1 - 5-n) die Positionen der ersten Sensoren (5-1 - 5-n) und/oder des mindestens einen zweiten Sensors (6-1 - 6-n) in dem Netzwerk (2) basierend auf dem POD-Verfahren bestimmt werden;
- Berechnen (S5) von Druckwerten und/oder Durchflussmengen für die Positionen des mindestens einen zweiten Sensors (6-1 - 6-n) in dem Netzwerk (2) basierend auf den Messwerten (7-1 - 7-n) der ersten Sensoren (5-1 - 5-n) und den reduzierten Daten;
- Bestimmen (S6) der Differenz (16) zwischen den berechneten Druckwerten und/oder den berechneten Durchflussmengen und den von dem jeweiligen zweiten Sensor (6-1 - 6-n) gemessenen Druckwerten und/oder den von dem jeweiligen zweiten Sensor (6-1 - 6-n) gemessenen Durchflussmengen;
- Ausgeben (S7) eines Warnsignals (17), wenn die bestimmte Differenz (16) über einem vorgegebenen Schwellwert (18) liegt.

2. Verfahren nach Anspruch 1, wobei das Bestimmen (S1) von Verbrauchsprofilen (13-1 - 13-n) die folgenden Schritte aufweist:
- Klassifizieren (S1-1) mindestens eines der Verbraucher (12-1 - 12-n) des Netzwerks (2);
- Bestimmen (S1-2) des theoretischen Gesamtverbrauchs des Netzwerks (2) basierend auf den klassifizierten Verbrauchern (12-1 - 12-n);
- Zuweisen (S1-3) eines Verbrauchswerts von 0 zu jedem der klassifizierten Verbraucher (12-1 - 12-n) und festlegen einer Menge Q des in dem Netzwerk (2) transportierten Mediums, die kleiner ist, als der bestimmte theoretische Gesamtverbrauch;
- Messen (S1-4) des Gesamtverbrauchs des Netzwerks (2);
- Erhöhen (S1-5) des Verbrauchswerts eines zufällig ausgewählten der Verbraucher (12-1 - 12-n) um den Wert Q, solange die Summe der Verbrauchswerte aller Verbraucher (12-1 - 12-n) kleiner ist, als der gemessene Gesamtverbrauch, wobei die Wahrscheinlichkeit, dass ein Verbraucher (12-1 - 12-n) ausgewählt wird, seinem Anteil am bestimmten theoretischen Gesamtverbrauch entspricht.

3. Verfahren nach Anspruch 2, wobei beim Klassifizieren (S1-1) der Verbraucher (12-1 - 12-n) die Verbraucher (12-1 - 12-n) qualitativ Qualifiziert werden, dass ein Vergleich der einzelnen Verbraucher untereinander möglich wird.

4. Verfahren nach einem der vorhergehenden Ansprüche, wobei das Verfahren für einen vorgegebenen Messzeitraum durchgeführt wird, wobei der Messzeitraum insbesondere ein Zeitraum niedrigen Verbrauchs in dem Netzwerk (2) ist.

5. Vorrichtung (1) zur Leckagedetektion in einem Netzwerk (2),
mit ersten Sensoren (5-1 - 5-n) und mindestens einem zweiten Sensor (6-1 - 6-n) und einer Sensorschnittstelle (4),
welche dazu ausgebildet ist, Messwerte (7-1 - 7-n) von den ersten Sensoren (5-1 - 5-n) und dem mindestens einem zweiten Sensor (6-1 - 6-n) in dem Netzwerk (2) zu erfassen, wobei die ersten Sensoren (5-1 - 5-n) und der mindestens eine zweite Sensor (6-1 - 6-n) dazu ausgebildet sind Druck und/oder Durchflussmengen zu messen; **gekennzeichnet durch** eine Recheneinrichtung (8), die ausgelegt ist zum
- Bestimmen (S1) von Verbrauchsprofilen (13-1 - 13-n) für jeden Verbraucher (12-1 - 12-n) des Netzwerks (2);
- Berechnen (s2) von Druckprofilen (14-1 - 14-n) und/oder Durchflussprofilen (15-1 - 15-n) für das Netzwerk (2) basierend auf den bestimmten Verbrauchsprofilen (13-1 - 13-n), wobei beim Berechnen von Druckprofilen (14-1 - 14-n), und/oder Durchflussprofilen (15-1 - 15-n) mindestens eine Simulation des Netzwerks (2) durchgeführt wird, wobei die Simulation insbesondere mehr als zwei Mal durchgeführt wird;
- Reduzieren (S3) der Daten der berechneten Druckprofile (14 - 1 - 14-n) und der berechneten Durchflussprofile (15-1 - 15-n), wobei beim Reduzieren der Daten die Daten der Simulation basierend auf einer mathematischen Reihenentwicklung, insbesondere einer auf dem Proper Orthogonal Decomposition Verfahren (POD-Verfahren) basierenden Reihenentwicklung reduziert werden;
- Bestimmen von Positionen der ersten Sensoren (5-1 - 5-n) und/oder des mindestens einen zweiten Sensors (6-1 - 6-n) in dem Netzwerk (2) basierend auf dem POD Verfahren;
- Berechnen von Druckwerten und/oder Durchflussmengen für die mittels des POD-Verfahrens ermittelten Positionen der zweiten Sensoren (6-1 - 6-n) in dem Netzwerk (2) basierend auf den Messwerten (7-1 - 7-n) der ersten Sensoren (5-1 - 5-n) und den reduzierten Daten;
- Bestimmen (S6) der Differenz (16) zwischen den berechneten Druckwerten und/oder den berechneten Durchflussmengen und den von dem jeweiligen zweiten Sensor (6-1 - 6-n) gemessenen Druckwerten und/oder den von dem jeweiligen zweiten Sensor (6-1 - 6-n) gemessenen Durchflussmengen;
- Ausgeben (S7) eines Warnsignals (17), wenn die bestimmte Differenz (16) über einem vorgegebenen Schwellwert (18) liegt.

6. Vorrichtung nach Anspruch 5,
mit einer Datenbank (9), in welcher Daten zu den einzelnen Verbrauchern (12-1 - 12-n) des Netzwerks (2) gespeichert sind,
mit einem Verbrauchssensor (10), der dazu ausgebildet ist, den Gesamtverbrauch des Netzwerks (2) zu erfassen;
wobei die Recheneinrichtung (8) beim Bestimmen der Verbrauchsprofile (13-1 - 13-n):
die Verbraucher (12-1 - 12-n) des Netzwerks (2) basierend auf den gespeicherten Daten und/oder einer Benutzereingabe klassifiziert;
den theoretischen Gesamtverbrauchs des Netzwerks (2) basierend auf den klassifizierten Verbrauchern (12-1 - 12-n) bestimmt;
jedem der klassifizierten Verbraucher (12-1 - 12-n) einen Verbrauchswert von 0 zuweist und eine Menge Q des in dem Netzwerk (2) transportierten Mediums festlegt, die kleiner ist, als der bestimmte theoretische Gesamtverbrauch; und
den Verbrauchswerts eines zufällig ausgewählten der Verbraucher (12-1 - 12-n) um den Wert Q erhöht, solange die Summe der Verbrauchswerte aller Verbraucher (12-1 - 12-n) kleiner ist, als der durch den Verbrauchssensor (10) gemessene Gesamtverbrauch, wobei die Wahrscheinlichkeit, dass ein Verbraucher (12-1 - 12-n) ausgewählt wird, seinem Anteil am bestimmten theoretischen Gesamtverbrauch entspricht.

7. Vorrichtung nach Anspruch 5, wobei die Recheneinrichtung ferner ausgestaltet ist, die zusätzlichen Merkmale, im Verhältnis zu den Merkmalen des Anspruchs 1, nach einem der Ansprüche 2 bis 4 auszuführen.

8. Netzwerk (2),
mit einer Vielzahl von Knoten und Leitungen; und
mit mindestens einem ersten Sensor (5-1 - 5-n) und mindestens einem zweiten Sensor (6-1 - 6-n), wobei der mindestens eine erste Sensor (5-1 - 5-n) und der mindestens eine zweite Sensor (6-1 - 6-n) dazu ausgebildet sind Druck und/oder Durchflussmengen zu messen;
mit einer Vorrichtung nach einem der Ansprüche 5 - 7.

## Claims

1. Method for detecting leaks (3) in a network (2), having the steps of:
- determining (S1) consumption profiles (13-1 - 13-n) for each consumer (12-1 - 12-n) in the network (2);
- calculating (S2) pressure profiles (14-1 - 14-n) and/or flow profiles (15-1 - 15-n) for the network (2) on the basis of the determined consumption profiles (13-1 - 13-n), at least one simulation of the network (2) being carried out when calculating pressure profiles (14-1 - 14-n) and/or flow profiles (15-1 - 15-n), the simulation being carried out more than twice, in particular;
- reducing (S3) the data in the calculated pressure profiles (14-1 - 14-n) and in the calculated flow profiles (15-1 - 15-n), the data in the simulation being reduced when reducing the data on the basis of a mathematical series expansion, in particular a series expansion based on the proper orthogonal decomposition method (POD method);
- placing (S4) first sensors (5-1 - 5-n) and at least one second sensor (6-1 - 6-n) in the network (2), the first sensors (5-1 - 5-n) and the at least one second sensor (6-1 - 6-n) being designed to measure pressure and/or flow quantities, the positions of the first sensors (5-1 - 5-n) and/or of the at least one second sensor (6-1 - 6-n) in the network (2) being determined on the basis of the POD method when placing first sensors (5-1 - 5-n);
- calculating (S5) pressure values and/or flow quantities for the positions of the at least one second sensor (6-1 - 6-n) in the network (2) on the basis of the measured values (7-1 - 7-n) from the first sensors (5-1 - 5-n) and the reduced data;
- determining (S6) the difference (16) between the calculated pressure values and/or the calculated flow quantities and the pressure values measured by the respective second sensor (6-1
- 6-n) and/or the flow quantities measured by the respective second sensor (6-1 - 6-n);
- outputting (S7) a warning signal (17) if the determined difference (16) is above a predefined threshold value (18).

2. Method according to Claim 1, the determination (S1) of consumption profiles (13-1 - 13-n) having the following steps of:
- classifying (S1-1) at least one of the consumers (12-1 - 12-n) in the network (2);
- determining (S1-2) the theoretical total consumption of the network (2) on the basis of the classified consumers (12-1 - 12-n);
- allocating (S1-3) a consumption value of 0 to each of the classified consumers (12-1 - 12-n) and determining a quantity Q of the medium transported in the network (2) which is smaller than the determined theoretical total consumption;
- measuring (S1-4) the total consumption of the network (2);
- increasing (S1-5) the consumption value of a randomly selected one of the consumers (12-1 - 12-n) by the value Q as long as the sum of the consumption values of all consumers (12-1 - 12-n) is smaller than the measured total consumption, the probability of a consumer (12-1 - 12-n) being selected corresponding to its proportion of the determined theoretical total consumption.

3. Method according to Claim 2, the consumers (12-1 - 12-n) being qualitatively qualified when classifying (S1-1) the consumers (12-1 - 12-n) in such a manner that it becomes possible to compare the individual consumers with one another.

4. Method according to one of the preceding claims, the method being carried out for a predefined measurement period, the measurement period being a period of low consumption in the network (2), in particular.

5. Apparatus (1) for detecting leaks in a network (2), having first sensors (5-1 - 5-n) and at least one second sensor (6-1 - 6-n) and a sensor interface (4) which is designed to record measured values (7-1 - 7-n) from the first sensors (5-1 - 5-n) and the at least one second sensor (6-1 - 6-n) in the network (2), the first sensors (5-1 - 5-n) and the at least one second sensor (6-1 - 6-n) being designed to measure pressure and/or flow quantities; **characterized by** a computing device (8) which is designed to
- determine (S1) consumption profiles (13-1 - 13-n) for each consumer (12-1 - 12-n) in the network (2);
- calculate (S2) pressure profiles (14-1 - 14-n) and/or flow profiles (15-1 - 15-n) for the network (2) on the basis of the determined consumption profiles (13-1 - 13-n), at least one simulation of the network (2) being carried out when calculating pressure profiles (14-1 - 14-n) and/or flow profiles (15-1 - 15-n), the simulation being carried out more than twice, in particular;
- reduce (S3) the data in the calculated pressure profiles (14-1 - 14-n) and in the calculated flow profiles (15-1 - 15-n), the data in the simulation being reduced when reducing the data on the basis of a mathematical series expansion, in particular a series expansion based on the proper orthogonal decomposition method (POD method);
- determine positions of the first sensors (5-1 - 5-n) and/or of the at least one second sensor (6-1 - 6-n) in the network (2) on the basis of the POD method;
- calculate pressure values and/or flow quantities for the positions of the second sensors (6-1 - 6-n) in the network (2), as determined by means of the POD method, on the basis of the measured values (7-1 - 7-n) from the first sensors (5-1 - 5-n) and the reduced data;
- determine (S6) the difference (16) between the calculated pressure values and/or the calculated flow quantities and the pressure values measured by the respective second sensor (6-1
- 6-n) and/or the flow quantities measured by the respective second sensor (6-1 - 6-n);
- output (S7) a warning signal (17) if the determined difference (16) is above a predefined threshold value (18).

6. Apparatus according to Claim 5,
having a database (9) which stores data relating to the individual consumers (12-1 - 12-n) in the network (2),
having a consumption sensor (10) which is designed to record the total consumption of the network (2);
the computing device (8), when determining the consumption profiles (13-1 - 13-n):
classifying the consumers (12-1 - 12-n) in the network (2) on the basis of the stored data and/or a user input;
determining the theoretical total consumption of the network (2) on the basis of the classified consumers (12-1 - 12-n);
allocating a consumption value of 0 to each of the classified consumers (12-1 - 12-n) and determining a quantity Q of the medium transported in the network (2) which is smaller than the determined theoretical total consumption; and
increasing the consumption value of a randomly selected one of the consumers (12-1 - 12-n) by the value Q as long as the sum of the consumption values of all consumers (12-1 - 12-n) is smaller than the total consumption measured by the consumption sensor (10), the probability of a consumer (12-1 - 12-n) being selected corresponding to its proportion of the determined theoretical total consumption.

7. Apparatus according to Claim 5, the computing device also being configured to carry out the additional features, in relation to the features of Claim 1, according to one of Claims 2 to 4.

8. Network (2),
having a multiplicity of nodes and lines; and
having at least one first sensor (5-1 - 5-n) and at least one second sensor (6-1 - 6-n), the at least one first sensor (5-1 - 5-n) and the at least one second sensor (6-1 - 6-n) being designed to measure pressure and/or flow quantities;
having an apparatus according to one of Claims 5-7.

## Revendications

1. Procédé de détection de fuites (3) dans un réseau (2), comprenant les étapes suivantes:
- détermination (S1) de profils de consommation (13-1 - 13-n) pour chaque consommateur (12-1 - 12-n) du réseau (2);
- calcul (S2) de profils de pression (14-1 - 14-n) et/ou de profils de débit (15-1 - 15-n) pour le réseau (2) se basant sur les profils de consommation déterminés (13-1 - 13-n), lors du calcul des profils de pression (14-1 - 14-n) et/ou des profils de débit (15-1 - 15-n) au moins une simulation du réseau (2) étant effectuée, la simulation s'effectuant en particulier plus de deux fois;
- réduction (S3) des données des profils de pression (14-1 - 14-n) calculés et des profils de débit (15-1 - 15-n) calculés, lors de la réduction des données, les données de la simulation se basant sur un développement mathématique en série, surtout sur un développement en série se basant sur la Décomposition orthogonale aux valeurs propres (procédé POD), étant réduites;
- placement (S4) de premiers détecteurs (5-1 - 5-n) et d'au moins un deuxième détecteur (6-1 - 6-n) dans le réseau (2), les premiers détecteurs (5-1 - 5-n) et le au moins un deuxième détecteur (6-1 - 6-n) étant réalisés pour mesurer la pression et/ou les quantités de débit, lors du placement de premiers détecteurs (5-1 - 5-n) les positions des premiers détecteurs (5-1 - 5-n) et/ou du au moins un deuxième détecteur (6-1 - 6-n) dans le réseau (2) se basant sur la POD étant déterminées;
- calcul (S5) de valeurs de pression et/ou de quantités de débit pour les positions du au moins un deuxième détecteur (6-1 - 6-n) dans le réseau (2) sur base de valeurs de mesure (7-1 - 7-n) des premiers détecteurs (5-1 - 5-n) et sur celle des données réduites;
- détermination (S6) de la différence (16) entre les valeurs de pression calculées et/ou les quantités de débit calculées et les valeurs de pression mesurées par le deuxième détecteur (6-1 - 6-n) respectif et/ou les quantités de débit mesurées par le deuxième détecteur (6-1 - 6-n) respectif;
- émission (S7) d'un signal d'alerte (17) quand la différence déterminée (16) dépasse positivement une valeur de seuil prédéterminée (18).

2. Procédé selon la revendication 1, dans lequel la détermination (S1) de profils de consommation (13-1 - 13-n) présente les étapes suivantes:
- classification (S1-1) d'au moins un des consommateurs (12-1 - 12-n) du réseau (2);
- détermination (S1-2) de la consommation totale théorique du réseau (2) se basant sur les consommateurs classifiés (12-1 - 12-n) ;
- affectation (S1-3) d'une valeur de consommation de 0 à chacun des consommateurs classifiés (2) et fixation d'une quantité Q du milieu transporté dans le réseau (2), qui est inférieure à la consommation totale théorique déterminée;
- mesure (S1-4) de la consommation totale du réseau (2);
- augmentation (S1-5) de la valeur de consommation d'un consommateur aléatoirement sélectionné parmi ceux-ci (12-1 - 12-n) de la valeur Q, pour autant que la somme des valeurs de consommation de tous les consommateurs (12-1 - 12-n) soit plus petite que la consommation totale mesurée, la probabilité qu'un consommateur (12-1 - 12-n) soit sélectionné correspondant à sa part de la consommation théorique déterminée.

3. Procédé selon la revendication 2, dans lequel lors de la classification (S1-1) des consommateurs (12-1 - 12-n), les consommateurs (12-1 - 12-n) sont qualitativement qualifiés de sorte qu'une comparaison des différents consommateurs les uns avec les autres, est possible.

4. Procédé selon l'une des revendications précédentes, dans lequel le procédé est exécuté pour une période de mesure prédéterminée, la période de mesure étant en particulier une période de faible consommation dans le réseau (2).

5. Appareil (1) de détection de fuites dans un réseau (2),
avec des premiers détecteurs (5-1 - 5-n) et au moins un deuxième détecteur (6-1 - 6-n) et une interface de détecteur (4),
lequel est réalisé pour saisir des valeurs de mesure (7-1 - 7-n) des premiers détecteurs (5-1 - 5-n) et du au moins un deuxième détecteur (6-1 - 6-n) dans le réseau (2), les premiers détecteurs (5-1 - 5-n) et le au moins un deuxième détecteur (6-1 - 6-n) étant réalisés pour mesurer la pression et/ou les quantités de débit; et **caractérisé par** un dispositif de calcul (8) prévu pour les étapes suivantes:
- détermination (S1) de profils de consommation (13-1 - 13-n) pour chaque consommateur (12-1 - 12-n) du réseau (2);
- calcul (s2) de profils de pression (14-1 - 14-n) et/ou de profils de débit (15-1 - 15-n) pour le réseau (2) se basant sur les profils de consommation déterminés (13-1 - 13-n), lors du calcul des profils de pression (14-1 - 14-n) et/ou des profils de débit (15-1 - 15-n) au moins une simulation du réseau (2) étant effectuée, la simulation s'effectuant en particulier plus de deux fois;
- réduction (S3) des données des profils de pression (14-1 - 14-n) calculés et des profils de débit (15-1 - 15-n) calculés, lors de la réduction des données, les données de la simulation se basant sur un développement mathématique en série, surtout sur un développement en série se basant sur la Décomposition orthogonale aux valeurs propres (procédé POD), étant réduites;
- détermination de positions des premiers détecteurs (5-1 - 5-n) et/ou du au moins un deuxième détecteur (6-1 - 6-n) dans le réseau (2) se basant sur le procédé POD;
- calcul de valeurs de pression et/ou de quantités de débit pour les positions, déterminées au moyen du procédé POD, des deuxièmes détecteurs (6-1 - 6-n) dans le réseau (2) sur base des valeurs de mesure (7-1 - 7-n) des premiers détecteurs (5-1 - 5-n) et des données réduites;
- détermination (S6) de la différence (16) entre les valeurs de pression calculées et/ou les quantités de débit calculées et les valeurs de pression mesurées par le deuxième détecteur (6-1 - 6-n) respectif et/ou les quantités de débit mesurées par le deuxième détecteur (6-1 - 6-n) respectif;
- émission (S7) d'un signal d'alerte (17) quand la différence déterminée (16) dépasse positivement une valeur de seuil prédéterminée (18).

6. Dispositif selon la revendication 5,
avec une banque de données (9), dans laquelle les données relatives aux différents consommateurs (12-1 - 12-n) du réseau (2) sont mémorisées,
avec un détecteur de consommation (10) réalisé pour saisir la consommation totale du réseau (2);
dans lequel le dispositif de calcul (8), lors de la détermination des profils de consommation (13-1 - 13-n):
- classifie les consommateurs (12-1 - 12-n) du réseau (2) sur base des données mémorisées et/ou d'une entrée de consommateur;
- détermine la consommation totale théorique du réseau (2) sur base des consommateurs classifiés (12-1 - 12-n);
- affecte à chacun des consommateurs classifiés (12-1 - 12-n) une valeur de consommation de 0 et une quantité Q du milieu transporté dans le réseau (2), qui est inférieure à la consommation totale théorique déterminée; et
- augmente (12-1) la valeur de consommation d'un consommateur aléatoirement sélectionné parmi ceux-ci (12-1 - 12-n) de la valeur Q, pour autant que la somme des valeurs de consommation de tous les consommateurs (12-1 - 12-n) soit plus petite que la consommation totale mesurée par le détecteur de consommation (10), la probabilité qu'un consommateur (12-1 - 12-n) soit sélectionné correspondant à sa part de la consommation totale théorique déterminée.

7. Appareil selon la revendication 5, dans lequel l'appareil de calcul est configuré en outre pour exécuter un procédé selon l'une des revendications 2 à 4.

8. Réseau (2), avec une pluralité de noeuds et de canalisations; et
avec au moins un premier détecteur (5-1 - 5-n) et au moins un deuxième détecteur (6-1 - 6-n), le au moins un premier détecteur (5-1 - 5-n) et le au moins un deuxième détecteur (6-1 - 6-n) étant réalisés pour mesurer la pression et/ou les quantités de débit;
avec un appareil selon l'une des revendications 5 à 7.
